# FASCICULE DE BREVET EUROPEEN

(11) **EP 1 702 694 B1**
(45) Date de publication et mention de la délivrance du brevet: **07.05.2008**
(21) Numéro de dépôt: 06356023.9
(22) Date de dépôt: 09.03.2006
(51) Int. Cl.: B21D 39/02, B23B 31/12

(54) **Mandrin porte-outil pour machine tournante, muni de moyens de verrouillage**
Werkzeugspannfutter für drehende Maschine, mit Verriegelungsmittel
Tool chuck for rotating machine, provided with locking means

(30) Priorité: 16.03.2005 FR 0502587
(43) Date de publication de la demande: 20.09.2006
(73) Titulaire: ETABLISSEMENTS AMYOT S.A., F-25300 Pontarlier (FR)
(72) Inventeur: Cachod, Yves, 25270 Levier (FR)
(74) Mandataire: Maureau, Philippe

(56) Documents cités:
- EP-A- 0 335 593
- EP-A- 0 590 754
- EP-A- 0 864 390
- EP-A- 1 314 499
- US-A- 4 302 021
- US-A- 6 007 071
- US-A1- 2003 141 676
- US-A1- 2004 217 558
- US-A1- 2004 227 309

## Description

La présente invention concerne un mandrin porte-outil pour l'équipement d'une machine tournante, muni de moyens de verrouillage, tel que décrit dans le préambule de la revendication 1. Un tel mandrin est connu du document US-A-4, 302, 021.

Un mandrin monté sur l'arbre d'une machine tournante vise à réaliser la fixation d'un outil, tel qu'un foret s'il s'agit d'un outil de perçage. La fixation de l'outil sur le mandrin est couramment réalisée par l'intermédiaire de trois mors convergeant vers l'avant, entraînés et guidés par différents moyens ménagés dans le mandrin, de telle sorte que le déplacement axial des mors vers l'avant se traduit par un rapprochement de ceux-ci en vue de réaliser le serrage de l'outil, tandis que le déplacement vers l'arrière des mors s'accompagne d'un desserrage de l'outil.

Un mandrin du type précité est en général équipé d'une pièce centrale qui présente d'une part une partie arrière destinée à être fixée à la machine tournante et d'autre part une partie avant à laquelle sont associés les mors, et qui est entourée d'une bague de serrage.

Par mise en rotation de la bague de serrage, un utilisateur peut actionner le mandrin. A cet effet, les mors possèdent une partie filetée extérieurement pouvant être entraînée en rotation par un écrou périphérique qui est entraîné par la bague de serrage. La rotation de la bague de serrage par rapport à la pièce centrale conduit au serrage ou au desserrage des mors selon le sens de rotation.

Or, lors de l'utilisation de la machine tournante, les vibrations et/ou les efforts exercés sur l'outil peuvent conduire au desserrage de celui-ci. Il existe des systèmes de verrouillage qui permettent d'éviter un desserrage de l'outil. Mais de tels systèmes, s'ils permettent d'éviter le desserrage des mors sous l'effet des vibrations générées lors du travail en percussion, ne permettent en aucun cas de contrer un couple important de desserrage. De plus, les systèmes connus sont constitués de nombreuses petites pièces dont le positionnement relatif et la fixation sont délicats à réaliser, et ils s'avèrent relativement fragiles.

On connaît également des mandrins de type auto-serrants, dans lesquels la pièce centrale présente une partie avant filetée. Ces mandrins comprennent un corps entourant la pièce centrale, dans lequel sont ménagés des logements convergeant vers l'avant, et des mors montés et guidés en translation dans ces logements. Les mors comprennent une denture sur leur face intérieure, coopérant avec le filetage de la pièce centrale pour leur déplacement entre la position de serrage et la position desserrée et pour la mise en rotation de l'outil. La bague de serrage est montée autour du corps de façon à pouvoir pivoter par rapport à celui-ci.

Les mandrins de type auto-serrant présentent de nombreux avantages en terme de simplicité d'utilisation et de puissance de serrage. Néanmoins, un problème majeur les pénalise, à savoir l'impossibilité de les utiliser en rotation à gauche (la pièce centrale du mandrin auto-serrant présentant un filetage à droite), car ils s'ouvrent alors quasiment instantanément du fait de leur structure propre.

De tels mandrins ne sont donc pas adaptés pour l'utilisation sur une machine de type visseuse / dévisseuse. Par ailleurs, dans le cas de l'utilisation sur une machine de type perceuse / perforeuse, ces mandrins ne permettent pas de faciliter le retrait du foret hors de la paroi à percer par la mise en rotation à gauche de l'arbre de la machine.

Il existe des systèmes de verrouillage actionnés directement en fin du mouvement de fermeture du mandrin, qui permettent d'éviter un desserrage de l'outil lors d'une rotation à gauche. Mais, là encore, les systèmes connus, qui mettent en oeuvre des ressorts, ne permettent en aucun cas de contrer un couple important de desserrage. En effet, un ressort peut contrer le desserrage d'un mandrin dû à une vibration, par exemple lors de percussions, mais non un couple de desserrage important. De plus, leur robustesse et leur facilité de mise en oeuvre ne sont pas optimales.

Le but de l'invention est donc de fournir un mandrin muni d'un système de verrouillage simple et robuste, actionné automatiquement en fin de fermeture des mors, qui permette de contrer le couple d'ouverture d'un mandrin, et notamment d'un mandrin de type auto-serrant travaillant en rotation à gauche.

A cet effet, l'invention concerne un mandrin porte-outil pour l'équipement d'une machine tournante, tel que défini dans la revendication 1. Les revendications dépendantes décrivent des réalisations avantageuses de l'invention.

Selon une réalisation possible, la partie d'actionnement du doigt de verrouillage comprend un logement de verrouillage et un logement de déverrouillage écartés radialement l'un de l'autre et présentant chacun une ouverture tournée vers la bague de serrage, et la bague de serrage comprend un ergot de verrouillage et un ergot de déverrouillage faisant saillie vers l'intérieur et écartés radialement l'un de l'autre d'une distance supérieure à l'écartement radial entre les logements de verrouillage et de déverrouillage du doigt, la bague de serrage étant apte à être déplacée en rotation par rapport à la pièce tournante entre la position de verrouillage, dans laquelle l'ergot de verrouillage coopère avec le logement de verrouillage et la position de déverrouillage, dans laquelle l'ergot de déverrouillage coopère avec le logement de déverrouillage.

La partie de blocage du doigt de verrouillage peut présenter, au voisinage de l'ouverture de la pièce tournante, et par rapport au premier sens de rotation de la pièce centrale, une face amont incurvée et une face aval bombée, le pivotement du doigt de verrouillage dans un plan transversal au mandrin autour d'une paroi de l'ouverture s'effectuant autour d'un axe fictif situé dans le renfoncement formé par la face amont incurvée. De ce fait, le pivotement du doigt de verrouillage par rapport à la pièce tournante est facilité.

Il doit être noté que le doigt de verrouillage, une fois actionné dans sa position de verrouillage vient s'arc-bouter entre la denture de la pièce centrale et la pièce tournante, lorsqu'une action de desserrage est exercée, de telle sorte que c'est le doigt qui encaisse tous les efforts, à l'exclusion des éléments d'actionnement. Il n'y a donc pas de risque de desserrage accidentel, comme dans le cas d'un dispositif de verrouillage mettant en oeuvre des éléments élastiques.

Pour sa bonne compréhension, l'invention est à nouveau décrite ci-dessous en référence aux figures annexées représentant, à titre d'exemple non limitatif, une forme de réalisation possible du mandrin.

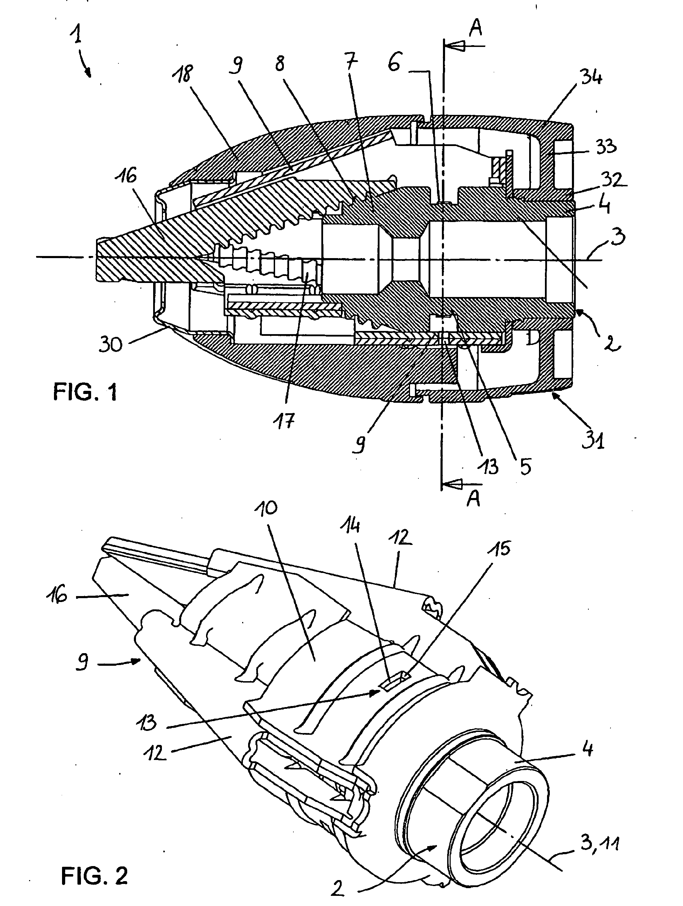

La figure 1 est une vue en coupe longitudinale d'un mandrin selon l'invention ;
La figure 2 est une vue en perspective du corps du mandrin, placé autour de la pièce centrale ;

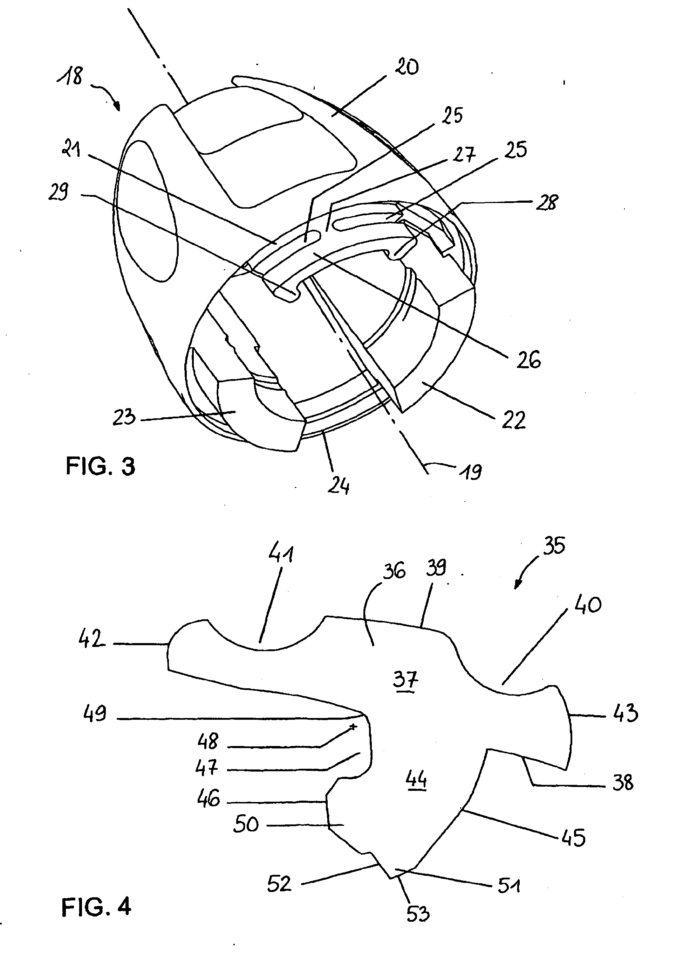

La figure 3 est une vue en perspective de la bague de serrage ;
La figure 4 est une vue en élévation du doigt de verrouillage ;

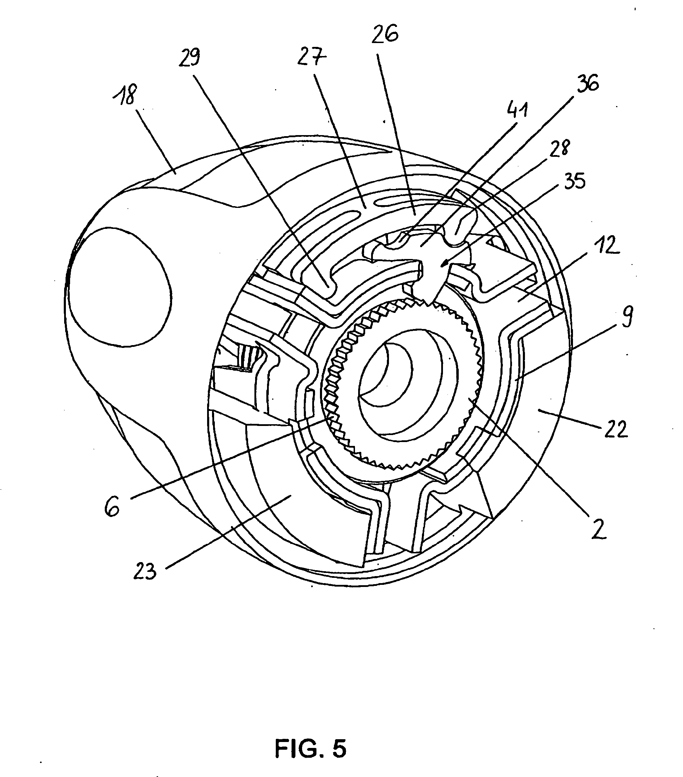

La figure 5 est une vue en perspective montrant l'intérieur du mandrin de la figure 1, coupé transversalement selon la ligne AA, en position verrouillée ; et
Les figures 6 et 7 sont des vues en coupe, selon la ligne AA, du mandrin de la figure 1, respectivement en position déverrouillée et en position verrouillée.

Le mandrin 1 comprend tout d'abord une pièce centrale 2, d'axe 3, comportant une partie arrière 4 destinée à être fixée sur un arbre moteur de la machine tournante, une partie centrale 5 présentant une denture périphérique 6 orientée axialement, et une partie avant 7 présentant une forme tronconique convergeant vers l'avant, munie d'un filetage extérieur 8 à droite.

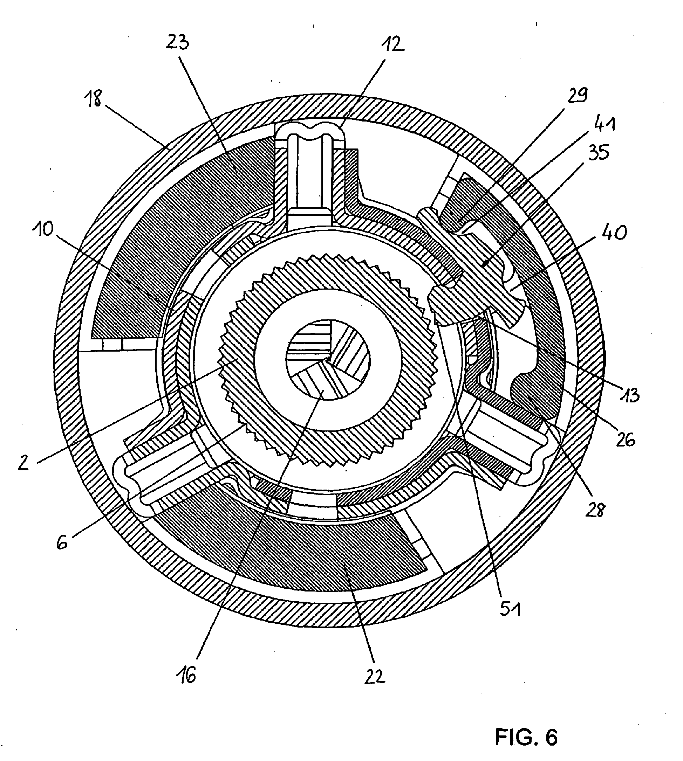

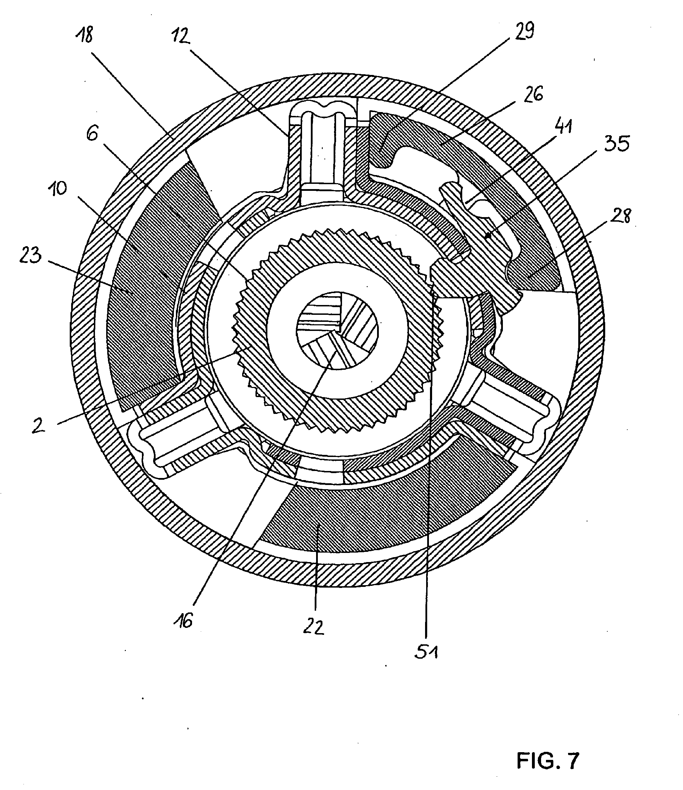

Le mandrin 1 comprend également un corps 9 entourant la pièce centrale 2 et monté mobile en rotation par rapport à la pièce centrale 2. Le corps présente une enveloppe 10 sensiblement cylindrique d'axe 11, de laquelle font saillie globalement radialement trois logements 12 convergeant vers l'avant et sensiblement équirépartis sur la périphérie. De plus, une ouverture 13 est ménagée dans l'enveloppe 10 du corps 9, environ à un tiers de la distance radiale entre deux logements 12 adjacents. L'ouverture 13 est située en regard de la denture périphérique 6 de la pièce centrale 2, lorsque le corps 9 est monté sur la pièce centrale 2, et est délimitée par une paroi avant 14 et une paroi arrière orthogonales à l'axe 11 de l'enveloppe 10 et deux parois latérales 15 perpendiculaires aux parois avant 14 et arrière. Bien que d'autres réalisations puissent être envisagées, le corps 9 est ici formé à partir d'une tôle comprenant trois ailes repliées sur elles-mêmes, représentées avec des hachures différentes dans les vues en coupe (figures 6 et 7).

Le mandrin 1 comprend en outre des mors 16, chacun étant monté et guidé en translation dans un logement 12 du corps 9. Chaque mors 16 comporte une denture 17 sur sa face intérieure, destinée à coopérer avec le filetage 8 de la pièce centrale 2.

Une bague de serrage 18, d'axe 19, est montée autour du corps 9, en partie avant du mandrin 1, sensiblement coaxialement. La bague de serrage 18 comprend une enveloppe 20 en forme de dôme ouvert vers l'arrière, dont le diamètre intérieur est légèrement supérieur au diamètre extérieur des logements 12 tout le long de l'axe, afin que le corps 9 s'insère parfaitement dans la bague de serrage 18.

A l'intérieur de l'enveloppe 20, à proximité de sa face intérieure et venus de matière avec elle, la bague de serrage 18 comporte trois organes 21, 22, 23 présentant en section une forme de portion de couronne coaxiale à l'enveloppe 20. Les organes 21, 22, 23 sont sensiblement équirépartis à la périphérie intérieure de l'enveloppe 20 et font saillie axialement vers l'arrière au-delà du bord arrière 24 de l'enveloppe 20.

Les organes 21, 22, 23 présentent une épaisseur radiale inférieure à la distance radiale entre la face intérieure de l'enveloppe 20 de la bague de serrage 18 et la face extérieure de l'enveloppe 10 du corps 9, à l'état monté, et une longueur circonférentielle inférieure à l'espacement circonférentiel entre deux logements 12 du corps 9. Par exemple, chaque organe 21, 22, 23 s'étend sur un arc de cercle d'environ 60 à 80°. Ainsi, à l'état monté autour du corps 9, la bague de serrage 18 peut pivoter autour du corps 9 selon une amplitude angulaire limitée, chaque organe 21, 22, 23 se déplaçant en rotation entre deux positions extrêmes définies par la butée contre un logement 12. L'amplitude de ce déplacement est par exemple de l'ordre de 20 à 40°.

L'un des trois organes 21 comprend deux rainures 25 annulaires, pratiquées chacune depuis une extrémité circonférentielle de l'organe 21, sensiblement sur un même arc de cercle et au droit du bord arrière 24 de l'enveloppe 20, sur une distance inférieure à la moitié de la longueur circonférentielle de l'organe 21. Ainsi, la partie arrière de l'organe 21 forme une patte 26 en forme de portion de couronne, reliée à l'enveloppe 20 par un pont de matière 27. De plus, la patte 26 présente une échancrure réalisée depuis sa face intérieure, sensiblement centrée de façon circonférentielle, de sorte que la patte 26 présente à ses parties extrêmes circonférentielles deux ergots, respectivement un ergot de verrouillage 28 et un ergot de déverrouillage 29. L'ergot de verrouillage 28 présente une longueur circonférentielle plus importante que l'ergot de déverrouillage 29.

Du fait de sa longueur axiale réduite et de son rattachement à l'enveloppe 20 uniquement par le pont 27, la patte 26 peut être déformée élastiquement dans un plan transversal (orthogonal à l'axe du mandrin) de façon à rapprocher ou éloigner les ergots 28, 29 l'un de l'autre. Par ailleurs, le contour des ergots 28, 29 est arrondi afin de faciliter leur déplacement et leur glissement le long de différentes surfaces, comme on le verra plus loin.

Un nez métallique 30 est en outre monté à l'intérieur de la bague de serrage 18. Le nez 30 fait en partie saillie à l'avant du mandrin 1 et est muni d'une ouverture centrale permettant le passage des mors 16 et de l'outil.

Le mandrin 1 comprend également une bague arrière 31 engagée autour de la partie arrière 4 la pièce centrale 2 de façon sensiblement coaxiale. La bague arrière 31 et la bague de serrage 18 sont sensiblement adjacentes et de même diamètre dans leur zone d'adjacence, le mandrin 1 présentant ainsi une enveloppe latérale sensiblement continue. La bague arrière 31 comprend une partie cylindrique 32 engagée sur la partie arrière 4 de la pièce centrale 2, prolongée vers l'extérieur par une partie radiale 33 en forme d'anneau, elle-même prolongée vers l'extérieur par une jupe 34 sensiblement cylindrique. La partie arrière 4 de la pièce centrale 2 et la partie cylindrique 32 de la bague arrière comprennent des moyens réciproques de blocage en rotation et en translation axiale.

Enfin, le mandrin 1 comprend un doigt de verrouillage 35 prévu pour être engagé dans l'ouverture 13 du corps 9. Le doigt de verrouillage 35 est formé à partir d'une plaque métallique par découpe ou emboutissage, et comprend une face avant et une face arrière 36 sensiblement planes et parallèles, espacées l'une de l'autre d'une distance sensiblement égale à la distance entre les parois avant 14 et arrière de l'ouverture 13. Ainsi, lorsque le doigt 35 est placé dans l'ouverture 13, ses faces avant et arrière 36 coopèrent avec les parois avant 14 et arrière de l'ouverture 13, ce qui assure la bonne tenue du doigt 35 dans un plan transversal à l'axe du mandrin 1.

Le doigt de verrouillage 35 comprend une partie d'actionnement 37 allongée dont la face intérieure 38 est sensiblement plane et dont la face extérieure 39, globalement parallèle à la face intérieure 38, comprend deux échancrures en forme de portion de disque, formant l'une un logement de verrouillage 40 et l'autre un logement de déverrouillage 41. Les logements 40, 41 sont espacés l'un de l'autre selon une direction parallèle aux faces avant et arrière du doigt 35 d'une distance inférieure à la distance circonférentielle entre l'ergot de déverrouillage 29 et l'ergot de verrouillage 28.

Afin de simplifier la description, on utilisera les termes « amont » et « aval » qui désignent chacun un côté du doigt de verrouillage 35, lorsqu'il est vu depuis sa face arrière 36, respectivement le côté du logement de déverrouillage 41 et le côté du logement de verrouillage 40.

La face amont 42 et la face aval 43 de la partie d'actionnement 37 du doigt de verrouillage 35 sont bombées et définissent des rampes de glissement des ergots de verrouillage 28 et de déverrouillage 29 comme on le verra plus loin.

Le doigt de verrouillage 35 comprend en outre une partie de blocage 44 faisant saillie sensiblement perpendiculairement de la face intérieure 38 de la partie d'actionnement 37, de façon non centrée mais décalée vers l'aval. La partie de blocage 44 comprend une face aval 45 bombée formant un patin de glissement, située sensiblement au droit du logement de verrouillage 40. La face amont 46 comprend une première portion incurvée formant un renfoncement 47 dans lequel se situe l'axe fictif 48 du congé de raccordement 49 en portion de cylindre entre la face amont 46 de la partie de blocage 44 et la face intérieure 38 de la partie d'actionnement 37. La face amont 46 présente ensuite une portion bombée formée par un sabot 50 faisant saillie vers l'amont sensiblement parallèlement à la partie d'actionnement 37 et au moins en partie en regard de celle-ci. La partie de blocage 44 présente ainsi sensiblement la forme d'un crochet recourbé vers l'amont.

Enfin, la partie extrême libre de la partie de blocage 44 se présente sous la forme d'une dent 51 comprenant en amont une face d'échappement 52 et en aval une face de blocage 53.

Lors du montage du mandrin 1, la partie de blocage 44 du doigt de verrouillage 35 est engagée dans l'ouverture 13 du corps 9, la face intérieure 38 de la partie d'actionnement 37 venant en contact avec la face extérieure de l'enveloppe 10 du corps 9. Puis la bague de serrage 18 est engagée autour du corps 9 et du doigt de verrouillage 35, de façon que la patte 26 soit située entre les deux mêmes logements 12 que le doigt de verrouillage 35.

Le fonctionnement du mandrin 1 est le suivant.

Initialement, les différents éléments constitutifs du mandrin 1 sont dans la position de la figure 6, à savoir la position déverrouillée, dans laquelle le doit de déverrouillage 29 est placé dans le logement de déverrouillage 41, le doigt de verrouillage 35 n'étant pas en contact avec la denture périphérique 6 de la pièce centrale 2. L'ergot de verrouillage 28 est alors en butée contre le logement 12 situé en aval du doigt de verrouillage 35.

Pour le déplacement des mors 16 vers la position de serrage d'un outil, la bague de serrage 18 est mise en rotation par rapport à la pièce centrale 2 dans le sens inverse des aiguilles d'une montre (selon la vue de la figure 6). L'ergot de déverrouillage 29 reste placé dans le logement de déverrouillage 41 et entraîne de ce fait le corps 9 en rotation autour de la pièce centrale 2, via le doigt de verrouillage 35. Puisque le doigt de verrouillage 35 n'est toujours pas en contact avec la denture périphérique 6, il ne s'oppose pas à la rotation relative de l'ensemble bague de serrage 18 - corps 9 par rapport à la pièce centrale 2. Les mors 16, du fait de la coopération entre leur denture 17 et le filetage 8 de la pièce centrale 2, sont déplacés dans les logement 12 du corps 9 vers l'avant du mandrin 1 et rapprochés les uns des autres.

Lorsque les mors 16 arrivent en contact avec l'outil à serrer, la résistance du corps 9 à l'encontre de l'entraînement en rotation par la bague de serrage 18 augmente. De ce fait, lorsque l'on poursuit le mouvement de rotation, l'ergot de déverrouillage 29 s'échappe du logement de déverrouillage 41 et l'ergot de verrouillage 28 est rapproché de la face aval 43 de la partie d'actionnement 37 du doigt de verrouillage 35 contre laquelle il vient glisser, avant de venir se placer dans le logement de verrouillage 40 en entraînant le pivotement du doigt de verrouillage 35 autour de l'axe fictif 48. Ce déplacement de l'ergot de verrouillage 28 est rendu possible par l'élasticité de la patte 26, comme expliqué plus haut.

Dans cette position, dite de verrouillage (figure 7), l'ergot de déverrouillage 29 est en butée contre le logement 12 situé en amont du doigt de verrouillage 35, et la dent 51 est engagée dans la denture périphérique 6 de la pièce centrale 2.

Lorsque la pièce centrale 2 est mise en rotation dans le sens des aiguilles d'une montre (« rotation à droite »), le mandrin 1 a naturellement tendance à se resserrer. La denture périphérique 6 de la pièce centrale 2 vient pousser sur la face d'échappement 52 de la dent 51 selon une direction sensiblement normale à cette face. Par leur structure, le congé de raccordement 49 et le patin de glissement 45 autorisent un mouvement de pivotement du doigt de verrouillage 35 par rapport au corps 9, dans un plan transversal, centré sur l'axe fictif 48. Ce pivotement est également rendu possible par les dimensions relatives de l'ouverture 13 et de la partie de blocage 44 du doigt de verrouillage 35.

Le doigt de verrouillage 35 peut donc pivoter dans le sens inverse des aiguilles d'une montre, ce mouvement étant limité par le doigt de verrouillage 28 lié à la patte 26 déformable élastiquement. Il s'ensuit que le doigt de verrouillage 35 est animé d'un mouvement de pivotement alternatif dans un plan transversal, à la manière d'un cliquet d'un système de roue à rochet, et génère un son caractéristique de cliquetis.

A l'inverse, si la pièce centrale 2 est mise en rotation dans le sens inverse des aiguilles d'une montre (« rotation à gauche »), le mandrin 1 a naturellement tendance à se desserrer. La denture périphérique 6 de la pièce centrale 2 vient pousser sur la face de blocage 53 de la dent 51 selon une direction sensiblement normale à cette face. En conséquence, le doigt de verrouillage 35 est contraint de pivoter dans le sens des aiguilles d'une montre vers une position de blocage dans laquelle le sabot 50 est plaqué contre la face intérieure du corps 9. De ce fait, l'ensemble pièce centrale 2 - doigt de verrouillage 35 - corps 9 - bague de serrage 18 est rendu solidaire en rotation, dans le sens inverse des aiguilles d'une montre, ce qui évite le desserrage des mors 16.

Pour procéder au déverrouillage et à l'ouverture du mandrin 1, il suffit d'entraîner la bague de serrage 18 en rotation dans le sens des aiguilles d'une montre, par rapport à la pièce centrale 2, depuis la position de verrouillage vers la position de déverrouillage.

Au cours de ce mouvement, l'ergot de verrouillage 28 quitte le logement de verrouillage 40, puis l'ergot de déverrouillage prend position dans le logement de déverrouillage 41, en provoquant le pivotement du doigt de verrouillage 35 autour de l'axe fictif 48, la dent 51 quittant donc le contact de la denture périphérique 6 de la pièce centrale 2. La bague de serrage 18 peut alors entraîner librement le corps 9 en rotation dans le sens des aiguilles d'une montre, les mors 16 étant déplacés vers la position desserrée où ils sont rétractés à l'intérieur du mandrin 1 et écartés les uns des autres, l'outil pouvant alors être ôté du mandrin 1.

Il va de soi que l'invention n'est pas limitée à la forme de réalisation décrite ci-dessus à titre d'exemple mais qu'elle en embrasse au contraire toutes les variantes de réalisation dans le cadre des revendications. L'invention peut notamment être mise en oeuvre dans des mandrins dans lesquels les mors sont entraînés par un écrou périphérique.

## Revendications

1. Mandrin porte-outil pour l'équipement d'une machine tournante, comprenant :
- une pièce centrale (2) comportant une partie arrière (4) destinée à être fixée sur un arbre moteur de la machine tournante, une denture périphérique (6), et une partie avant (7) à laquelle sont associés des mors (16), lesdits mors (16) pouvant être déplacés par rapport à la pièce centrale (2) entre une position de serrage de l'outil et une position desserrée ;
- une pièce tournante (9) montée mobile en rotation autour de la pièce centrale (2) ;
- une bague de serrage (18) montée mobile en rotation autour de la pièce tournante (9) selon une amplitude angulaire limitée et permettant le déplacement des mors (16) entre la position de serrage et la position desserrée;
où la pièce tournante (9) présente une ouverture (13) située en regard de la denture périphérique (6) de la pièce centrale (2), et dans laquelle est engagé un doigt de verrouillage (35), le doigt de verrouillage (35) comportant une partie de blocage (44) faisant saillie depuis l'ouverture (13) à l'intérieur de la pièce tournante (9) vers la pièce centrale (2) et une partie d'actionnement (37) disposée entre la pièce tournante (9) et la bague de serrage (18), et où la bague de serrage (18) comprend des moyens d'actionnement (28, 29) aptes à coopérer avec la partie d'actionnement (37) du doigt de verrouillage (35) pour faire pivoter ledit doigt de verrouillage (35) dans un plan transversal au mandrin (1) entre :
- une position de verrouillage, dans laquelle la partie de blocage (44) du doigt de verrouillage (35) coopère avec la denture périphérique (6) de la pièce centrale (2), afin d'autoriser le mouvement de rotation de la pièce centrale (2) par rapport à la bague de serrage (18) dans un premier sens, correspondant au serrage des mors (16), et d'interdire ce mouvement de rotation dans un deuxième sens, correspondant au desserrage des mors (16) ;
- et une position de déverrouillage, dans laquelle le doigt de verrouillage (35) ne coopère pas avec la pièce centrale (2), les mouvements de rotation de la pièce centrale (2) par rapport à la bague de serrage (18) étant possibles dans les deux sens,
**caractérisé en ce que** la partie d'actionnement (37) s'étend sensiblement perpendiculairement à la partie de blocage (44), et **en ce que** le pivotement dudit doigt de verrouillage (35) est guidé par les parois (14, 15) de l'ouverture (13).

2. Mandrin selon la revendication 1, **caractérisé en ce que** la partie d'actionnement (37) du doigt de verrouillage (35) comprend un logement de verrouillage (40) et un logement de déverrouillage (41) écartés radialement l'un de l'autre et présentant chacun une ouverture tournée vers la bague de serrage (18), et **en ce que** la bague de serrage (18) comprend un ergot de verrouillage (28) et un ergot de déverrouillage (29) faisant saillie vers l'intérieur et écartés radialement l'un de l'autre d'une distance supérieure à l'écartement radial entre les logements de verrouillage (40) et de déverrouillage (41) du doigt (35), la bague de serrage (18) étant apte à être déplacée en rotation par rapport à la pièce tournante (9) entre la position de verrouillage, dans laquelle l'ergot de verrouillage (28) coopère avec le logement de verrouillage (40) et la position de déverrouillage, dans laquelle l'ergot de déverrouillage (29) coopère avec le logement de déverrouillage (41).

3. Mandrin selon la revendication 1 ou 2, **caractérisé en ce que** la partie de blocage du doigt de verrouillage (35) présente, au voisinage de l'ouverture (13) de la pièce tournante (9), et par rapport au premier sens de rotation de la pièce centrale (2), une face amont (46) incurvée et une face aval (45) bombée, le pivotement du doigt de verrouillage (35) dans un plan transversal au mandrin (1) autour d'une paroi de l'ouverture (13) s'effectuant autour d'un axe fictif (48) situé dans le renfoncement (47) formé par la face amont incurvée (46).

4. Mandrin selon l'une des revendications 1 à 3, **caractérisé en ce que** la partie de blocage (44) du doigt de verrouillage (35) comprend un sabot (50) s'étendant sensiblement parallèlement à la partie d'actionnement (37) et au moins en partie en regard de celle-ci, définissant ainsi entre le sabot (50) et la partie d'actionnement (37) un renfoncement (47) apte à recevoir une portion de la pièce tournante (9).

5. Mandrin selon la revendication 3, **caractérisé en ce que**, en position verrouillée, et lorsque la pièce centrale (2) est animée d'un mouvement de rotation dans le deuxième sens, le doigt de verrouillage (35) est sollicité par la denture (6) de la pièce centrale (2) vers une position de blocage dans laquelle le sabot (50) est plaqué contre la face intérieure de la pièce tournante (9), l'ensemble pièce centrale (2) - doigt de verrouillage (35) - pièce tournante (9) - bague de serrage (18) étant rendu solidaire en rotation.

6. Mandrin selon l'une des revendications 2 à 5, **caractérisé en ce que**, en position verrouillée, la rotation de la pièce centrale (2) dans le premier sens provoque, via la denture (6), et du fait de la coopération entre l'ergot de verrouillage (28) de la bague de serrage (18) et le logement de verrouillage (40) du doigt de verrouillage (35), un mouvement de pivotement alternatif du doigt de verrouillage (35) dans un plan transversal, à la manière d'un cliquet d'un système de roue à rochet.

7. Mandrin selon l'une des revendications 1 à 6, **caractérisé en ce que** l'ouverture (13) est délimité par une paroi avant (14) et une paroi arrière orthogonales à l'axe du mandrin (1), le doigt de verrouillage (35) présentant une face avant et une face arrière (36) sensiblement planes et parallèles, destinées à coopérer avec les parois avant (14) et arrière de l'ouverture (13).

8. Mandrin selon l'une des revendications 1 à 7, **caractérisé en ce que** le doigt de verrouillage (35) est formé à partir d'une plaque métallique par découpe ou emboutissage.

9. Mandrin selon l'une des revendications 1 à 8, **caractérisé en ce que** les mors (16) sont guidés en translation dans des logements ménagés dans la pièce tournante formant un corps (9), les mors (16) convergeant vers l'avant et présentant une denture (17) sur leur face intérieure, et **en ce que** la partie avant (7) de la pièce centrale (2) est filetée et coopère avec la denture (17) des mors (16), de sorte que l'actionnement en rotation de la bague de serrage (18) par rapport à la pièce centrale (2) par un utilisateur provoque la rotation du corps (9) et donc des mors (16) qui, du fait de la coopération entre leur denture (17) et la pièce centrale (2) filetée, sont déplacés entre la position de serrage et la position desserrée.

## Claims

1. Tool-holding chuck for equipping a revolving machine, said chuck comprising:
- a central piece (2) having a rear part (4) which is intended to be fixed onto a driving shaft belonging to the revolving machine, a peripheral tooth system (6), and a front part (7) with which jaws (16) are associated, the said jaws (16) being capable of being displaced, in relation to the central piece (2), between a tool-clamping position and an unclamped position;
- a revolving piece (9) which is mounted so as to be movable in rotation about the central piece (2);
- a clamping ring (18) which is mounted so as to be movable in rotation about the revolving piece (9) along a limited angular amplitude and permits displacement of the jaws (16) between the clamping position and the unclamped position;
wherein the revolving piece (9) has an opening (13) which is situated opposite the peripheral tooth system (6) on the central piece (2) and into which a locking finger (35) is fitted, said locking finger (35) having an immobilising part (44) which projects from the opening (13), on the inside of the revolving piece (9), towards the central piece (2), and an activating part (37) which is disposed between the revolving piece (9) and the clamping ring (18), and wherein said clamping ring (18) comprises activating means (28, 29) which are capable of cooperating with said activating part (37) of the locking finger (35) so as to cause the said locking finger (35) to pivot within a plane transverse to the chuck (1) between:
- a locking position in which the immobilising part (44) of the locking finger (35) cooperates with the peripheral tooth system (6) on the central piece (2) in order to allow the rotational movement of said central piece (2) in relation to the clamping ring (18) in a first direction, which corresponds to the clamping of the jaws (16), and to preclude the said rotational movement in a second direction, which corresponds to the unclamping of said jaws (16);
- and an unlocking position in which the locking finger (35) does not cooperate with the central piece (2), the rotational movements of said central piece (2) in relation to the clamping ring (18) being possible in both directions,
**characterised in that** the activating part (37) extends substantially perpendicularly to the immobilising part (44), and **in that** the pivoting of the said locking finger (35) is guided by the walls (14, 15) of the opening (13) .

2. Chuck according to claim 1, **characterised in that** the activating part (37) of the locking finger (35) comprises a locking recess (40) and an unlocking recess (41) which are spaced apart radially from one another and each have an opening which is turned towards the clamping ring (18), and **in that** said clamping ring (18) comprises a locking lug (28) and an unlocking lug (29) which project inwards and are spaced apart radially from one another by a distance which is greater than the radial spacing between the locking recess (40) and unlocking recess (41) on the finger (35), the clamping ring (18) being capable of being displaced in rotation in relation to the revolving piece (9) between the locking position, in which the locking lug (28) cooperates with the locking recess (40), and the unlocking position, in which the unlocking lug (29) cooperates with the unlocking recess (41).

3. Chuck according to claim 1 or 2, **characterised in that** the immobilising part of the locking finger (35) has, in the vicinity of the opening (13) in the revolving piece (9) and in relation to the first direction of rotation of the central piece (2), a concave upstream face and a convex downstream face (45), the pivoting of the locking finger (35) within a plane transverse to the chuck (1) about a wall of the opening (13) taking place about an imaginary axis (48) situated in the indentation (47) formed by the concave upstream face (46).

4. Chuck according to one of claims 1 to 3, **characterised in that** the immobilising part (44) of the locking finger (35) comprises a shoe (50) which extends substantially parallel to the activating part (37) and at least partly opposite the latter, thus defining, between said shoe (50) and said activating part (37), an indentation (47) which is capable of receiving a portion of the revolving piece (9).

5. Chuck according to claim 3, **characterised in that**, in the locked position and when the central piece (2) is driven by a rotational movement in the second direction, the locking finger (35) is pulled by the tooth system (6) on the central part (2) towards an immobilising position in which the shoe (50) is pressed against the inner face of the revolving piece (9), the central piece (2)/locking finger (35)/revolving piece (9)/clamping ring (18) assembly being rendered integral in rotation.

6. Chuck according to one of claims 2 to 5, **characterised in that**, in the locked position, rotation of the central piece (2) in the first direction brings about, via the tooth system (6) and because of the cooperation between the locking lug (28) on the clamping ring (18) and the locking recess (40) in the locking finger (35), an alternating pivoting movement of said locking finger (35) within a transverse plane, after the fashion of a pawl in a ratchet-wheel system.

7. Chuck according to one of claims 1 to 6, **characterised in that** the opening (13) is delimited by a front wall (14) and a rear wall which are orthogonal to the axis of the chuck (1), the locking finger (35) having a front face and a rear face (36) which are substantially flat and parallel and are intended to cooperate with the front wall (14) and rear wall of the opening (13) .

8. Chuck according to one of claims 1 to 7, **characterised in that** the locking finger (35) is formed from a metal plate by cutting or punching.

9. Chuck according to one of claims 1 to 8, **characterised in that** the jaws (16) are guided in translation in recesses provided in the revolving part which forms a body, said jaws (16) converging towards the front and having a tooth system (17) on their inner face, and **in that** the front part (7) of the central piece (2) is threaded and cooperates with the tooth system (17) on the jaws (16), in such a way that rotational actuation of the clamping ring (18) in relation to the central piece (2) by a user brings about rotation of the body (9) and therefore of the jaws (16) which, because of the cooperation between their tooth system (17) and the threaded central piece (2), are displaced between the clamping position and the unclamped position.

## Patentansprüche

1. Werkzeugspannfutter für eine drehende Maschine, enthaltend:
• ein Mittelstück (2) mit einem vorderen Teil (4), der dafür vorgesehen ist, an einer Motorwelle der drehenden Maschine befestigt zu werden, einer umlaufenden Zahnung (6) und einem hinteren Teil (7), an dem Spannbacken (16) befestigt sind, wobei die Spannbacken (16) relativ zu dem Mittelstück (2) verschoben werden können zwischen einer Position zum Spannen des Werkzeugs und einer gelösten Position;
• ein sich drehendes Teil (9), das um das Mittelstück (2) herum drehbeweglich gelagert ist;
• einen Spannring (18), der entsprechend einer Winkelamplitude um das sich drehende Teil (9) herum drehbeweglich gelagert ist, wobei die Winkelamplitude begrenzt ist und die Verschiebung der Spannbacken (16) zwischen der Spannposition und der gelösten Position ermöglicht;
wobei das sich drehende Teil (9) eine Öffnung (13) aufweist, die der umlaufenden Zahnung (6) des Mittelstücks (2) gegenüber liegt und in die ein Verriegelungsfinger (35) eingreift, wobei der Verriegelungsfinger (35) einen Blockierabschnitt (44) aufweist, der von der Öffnung (13) in das Innere des sich drehenden Teils (9) in Richtung des Mittelstücks (2) vorspringt, und einen Betätigungsabschnitt (37), der zwischen dem sich drehenden Teil (9) und dem Spannring (18) angeordnet ist, und wobei der Spannring (18) Betätigungsmittel (28, 29) aufweist, die für das Zusammenwirken mit dem Betätigungsabschnitt (37) des Verriegelungsfingers (35) vorgesehen sind, um den Verriegelungsfinger (35) in einer zu dem Spannfutter (1) querrichteten Ebene schwenken zu lassen zwischen:
• einer Verriegelungsstellung, in der der Blockierabschnitt (44) des Verriegelungsfingers (35) mit der umlaufenden Zahnung (6) des Mittelstücks (2) zusammenwirkt, um die Drehbewegung des Mittelstücks (2) relativ zu dem Spannring (18) in einer ersten Richtung freizugeben, die dem Festspannen der Spannbacken (16) entspricht, und diese Drehbewegung in einer zweiten Richtung zu unterbieten, die dem Lösen der Spannbacken (16) entspricht;
• und einer Entriegelungsstellung, in der der Verriegelungsfinger (35) nicht mit dem Mittelstück (2) zusammenwirkt, wobei die Drehbewegungen des Mittelstücks (2) relativ zu dem Spannring (18) in beiden Richtungen möglich sind,
**dadurch gekennzeichnet, dass** der Betätigungsabschnitt (37) sich im Wesentlichen senkrecht zu dem Blockierabschnitt (44) erstreckt, und dass die Schwenkbewegung des Verriegelungsfingers (35) durch die Wandungen (14, 15) der Öffnung (13) geführt wird.

2. Spannfutter nach Anspruch 1, **dadurch gekennzeichnet, dass** der Betätigungsabschnitt (37) des Verriegelungsfingers (35) einen Verriegelungssitz (40) und einen Entriegelungssitz (41) aufweist, die in radialer Richtung voneinander beabstandet sind und jeweils eine Öffnung aufweisen, die in Richtung des Spannrings (18) ausgerichtet ist, und dass der Spannring (18) eine verriegelungsnase (28) und eine Entriegelungsnase (29) aufweist, die nach innen vorspringen und in radialer Richtung voneinander beabstandet sind um einen Abstand, der größer ist als der radiale Abstand zwischen dem verriegelungssitz (40) und dem Entriegelungssitz (41) des Verriegelungsfingers (35), wobei der Spannring (18) dafür vorgesehen ist, durch Drehung relativ zu dem sich drehenden Teil (9) verschoben zu werden zwischen der Verriegelungsstellung, in der die Verriegelungsnase (28) mit dem Verriegelungssitz (40) zusammenwirkt, und der Entriegelungsstellung, in der die Entriegelungsnase (29) mit dem Entriegelungssitz (41) zusammenwirkt.

3. Spannfutter nach Anspruch 1 oder 2, **dadurch gekennzeichnet, dass** der Blockierabschnitt des Verriegelungsfingers (35) in der Nähe der Öffnung (13) des sich drehenden Teils (9) und relativ zu der ersten Drehrichtung des Mittelstücks (2) eine gekrümmte vordere Fläche (46) und eine gewölbte hintere Fläche (45) aufweist, wobei die Schwenkbewegung des Verriegelungsfingers in einer zu dem Spannfutter (1) quergerichteten Ebene um eine Wandung der Öffnung (13) herum um eine fiktive Achse (48) herum erfolgt, die sich in der Vertiefung (47) befindet, die von der gekrümmten vorderen Fläche (46) gebildet ist.

4. Spannfutter nach einem der Ansprüche 1 bis 3, **dadurch gekennzeichnet, dass** der Blockierabschnitt (44) des verriegelungsfingers (35) einen Schuh (50) aufweist, der sich im wesentlichen parallel zu dem Betätigungsabschnitt (37) und zumindest zum Teil diesem gegenüber erstreckt, wobei er auf diese Weise zwischen dem Schuh (50) und dem Betätigungsabschnitt (37) eine Vertiefung (47) bildet, die für die Aufnahme eines Teils des sich drehenden Teils (9) vorgesehen ist.

5. Spannfutter nach Anspruch 3, **dadurch gekennzeichnet, dass** der Verriegelungsfinger (35) in der Verriegelungsstellung und wenn das Mittelstück (2) von einer Drehbewegung in die zweite Richtung getrieben wird, von der Zahnung (6) des Mittelstücks (2) in Richtung einer Blockierposition beaufschlagt wird, in der der Schuh (50) gegen die Innenfläche des sich drehenden Teils (9) gedrückt wird, wobei die Einheit aus Mittelstück (2), Verriegelungsfinger (35), sich drehendem Teil (9) und Spannring (18) drehfest wird.

6. Spannfutter nach einem der Ansprüche 2 bis 5, **dadurch gekennzeichnet, dass** die Drehung des Mittelstück (2) in der ersten Richtung in der Verriegelungsstellung über die Zahnung (6) und aufgrund des Zusammenwirkens zwischen der Verriegelungsnase (28) des Spannrings (18) und dem Verriegelungssitz (40) des Verriegelungsfingers (35) eine hin- und herschwenkende Bewegung des Verriegelungsfingers (35) in einer quergerichteten Ebene bewirkt, in der Art wie eine Sperrklinke eines Sperrzahnradsystems.

7. Spannfutter nach einem der Ansprüche 1 bis 6, **dadurch gekennzeichnet, dass** die Öffnung (13) von einer vorderen Wandung (14) und einer hinteren Wandung begrenzt wird, die zu der Achse des Spannfutters (1) orthogonal sind, wobei der Verriegelungsfinger (35) eine vordere Fläche und eine hintere Fläche (36) aufweist, die im Wesentlichen eben und parallel sind und dafür vorgesehen sind, mit der vorderen (14) und der hinteren Wandung der Öffnung (13) zusammenzuwirken.

8. Spannfutter nach einem der Ansprüche 1 bis 7, **dadurch gekennzeichnet, dass** der Verriegelungsfinger (35) ausgehend von einer Metallplatte durch Stanzen und Tiefziehen geformt ist.

9. Spannfutter nach einem der Ansprüche 1 bis 8, **dadurch gekennzeichnet, dass** die Spannbacken (16) in ihrer Verschiebung in Sitzen geführt werden, die in dem sich drehenden, einen Körper (9) bildenden Teil ausgebildet sind, wobei die Spannbacken (16) nach vorne konvergieren und an ihrer Innenfläche eine Zahnung (17) aufweisen, und dass der vordere Teil (7) des Mittelstücks (2) mit Außengewinde versehen ist und mit der Zahnung (17) der Spannbacken (16) zusammenwirkt, derart, dass das Drehen des Spannrings (18) relativ zu dem Mittelstück (2) durch einen Benutzer zu einer Drehung des Körpers (9) und somit der Spannbacken (16) führt, die aufgrund des Zusammenwirkens zwischen ihrer Zahnung (17) und dem mit Außengewinde versehenen Mittelstück (2) zwischen einer Spannposition und einer gelösten Position bewegt werden.
